# EUROPÄISCHE PATENTSCHRIFT

(11) **EP 1 222 151 B1**
(45) Veröffentlichungstag und Bekanntmachung des Hinweises auf die Patenterteilung: **03.03.2004**
(21) Anmeldenummer: 01940039.9
(22) Anmeldetag: 23.06.2001
(51) Int. Cl.: C05F 17/02, E04B 7/16

(54) **KOMPOSTBOXDACH**
COMPOST-BOX LID
TOIT DE BAC DE COMPOSTAGE

(30) Priorität: 25.06.2000 CH 128800
(43) Veröffentlichungstag der Anmeldung: 17.07.2002
(73) Patentinhaber: ARATO, Laszlo, CH-6374 Buochs (CH)
(72) Erfinder: TSCHUDI, Jean-Pierre, CH-2565 Jens (CH)
(74) Vertreter: Arato, Laszlo
(86) Internationale Anmeldenummer: PCT/CH2001/000391
(87) Internationale Veröffentlichungsnummer: WO 2002/000571

(56) Entgegenhaltungen:
- WO-A-94/29241
- DE-A- 19 630 239
- DE-U- 29 616 788
- FR-A- 734 488
- US-A- 5 206 173
- US-A- 5 655 335

## Beschreibung

Die Erfindung betrifft das Dach von Kompostboxen nach dem Oberbegriff von Anspruch 1.

Die Bildung von Humus ist ein Vorgang der Mineralisation und der Humifizierung von abgestorbenen pflanzlichen und tierischen Substanzen durch Bodentiere und Mikroorganismen, die mit der allmählichen Zersetzung dieser Stoffe den natürlichen Boden ergeben. Dieser Prozess, der auch als Verrottung bezeichnet wird, dauert in der Natur 1 - 2 Jahre. Findet der biologische Abbauund Umwandlungsprozess fester organischer Substanzen gewollt und unter dem Einfluss aerober Mikroorganismen statt, dann wird er als Kompostierung bezeichnet. Dabei entsteht in vielen Monaten aus Abfällen eine dunkle krümelige Masse, die man Kompost nennt.
Abfälle sind Stoffe, die in Haushalt, Gewerbe, Industrie und Landwirtschaft anfallen und, weil sie als nicht mehr verwertbar angesehen werden, zu beseitigen sind.
Dank der Kompostierung wird der Reichtum der Abfälle an Nährsalzen (Phosphaten, Stickstoff- und Kaliumverbindungen sowie Humusstoffen) wieder genutzt und zu einem wertvollen Pflanzennährboden umgebildet. Die Kompostierung verläuft bei genügender Luftzufuhr und ausreichender Feuchte geruchsfrei, was die moderne Technik mit industriemässig kontrollierter und forcierter Prozessführung auch in der Nachbarschaft von bewohntem Gebiet zu beherrschen behauptet. Diese Art der Verarbeitung bietet die Möglichkeit der Aufbereitung der Abfälle, indem diese von biologisch nicht abbaubaren Fremdstoffen, insbesondere Kunststoffen, befreit werden und unter druckbelüfteter Intensivrotte und Nachrotte in 7 Wochen den Rottegrad III-IV erreichen lässt. Der Kompost passiert anschliessend die Nachbearbeitung, d.h. er wird nach Siebung, Windsichtung, Nachsortierung und magnetischer Ausscheidung der Eisenmetalle zum Gebrauch freigegeben oder, um für höhere Ansprüche zu genügen, zu einer Nachreife von 4 - 5 Wochen in der Kompostieranlage behalten.
Um die Luftzufuhr sicherzustellen, wird das Kompostgut überdeckt und mit einem Überdruck von etwa 100 - 200 Pa belüftet. Da für das Anhäufen wie das Umschichten und Austragen des Kompostgutes Schaufellader vorgesehen sind und die Zu- und Abdeckung des Kompostgutes neuerdings auf Knopfdruck erfolgt, sind auf- und abplanbare Kompostboxen in Gebrauch, die massive Böden und Wände, und mit einem Ausleger überfahrbare Zellen (DE 296 16 788 U1) und an den Wänden Klemmvorrichtungen für die Befestigung der Plane, oder, bei viereckigem Grundriss und vorzugsweise reihenweiser Anordnung, aufmachbare Frontseiten und mit Aufzügen aufklappbare bespannte Dachflügel aufweisen.
Die Dachflügel bestehen aus zwei Dachflügelrahmen, deren Planen atmungsaktive semipermeable Planen sind und geschlossen ein Giebeldach bilden. Die Planen schützen das Kompostgut vor dem Wetter, aber auch vor übermässigem Austrocknen und lassen zugleich das bei der Kompostierung generierte Kohlendioxyd CO₂ entweichen. Weil bei hoher Feuchtigkeit die Sättigung der Luft bei höheren Temperaturen erreicht wird und die Oberflächentemperatur der Plane bei oder in der Nähe der Aussenluft liegt, erreichen viele Dampfmoleküle den Taupunkt und verflüssigen sich an der kühlenden Membranfläche zu Kondensat. Damit die Tropfen des Kondensates nicht zur Scharnierkante des Dachflügelrahmens laufen, sondern einigermassen verteilt hinunter regnen, ist die innere Fläche des bespannten Dachflügels durch achsenparallele Rinnlappen unterteilt, an deren unteren Rand das Abtropfen geschieht.
Aus der Schrift DE 296 16 788 U1 (S. 8 Absatz 3) ist bekannt, dass die Zudeckung nicht oder nicht ganz luftdicht ist. Aus Klagen enttäuschter Betreiber und der Bewohnern der Nachbarschaft von Kompostboxanlagen ist bekannt, dass die Herstellung von Kompost stets mit Emissionen verbunden ist, die das Betriebspersonal wie die Leute aus der Umgebung physisch und psychisch belasten. Nach neusten Ergebnissen der Forschung (vgl. Kompost Magazin 1999, S.11, www.kompost.ch) ist die Inhalation der Aerosole von Kompost explizit pathogen.

Der Grund dieses erheblichen Nachteils von Kompostboxen älterer wie neuerer Bauart besteht neben eingestandenen Undichtheiten darin, dass im Betrieb durch den Innendruck (∼ 200 Pa) ein Auftrieb (∼ 200 N/m²) erzeugt wird, der in etwa dem Eigengewicht der Dachkonstruktion entspricht, so dass der statische Zustand der Dachflügel labil und somit das Dach der Kompostbox nicht richtig zu ist. Wegen diesen Instabilitäten kommt es zur unkontrollierten Ventilation der Kompostbox und damit zum vermehrten Feuchteverlust des Kompostgutes. Weil die Feuchte, die am Dachhimmel kondensiert, auf dem Weg zu den Rinnlappen rezirkuliert wird, kommt es zur sukzessiven Umverteilung der Feuchte des Kompostgutes. Die Folge dieser Umverteilung wird mit der Zeit fatal, wenn der Flüssigkeitsfilm des Kompostgutes örtlich eintrocknet, weil mit dem Feuchtemangel die natürliche Filterwirkung verloren geht, die zuvor zur Bindung von Staub, Geruchsstoffen und anderen Partikeln, wie Bakterien, Pilzen und Viren imstande war. So ist, wegen Mängeln an bestehenden Kompostboxen, eine sich generierende Gefahr von potentiell schädlichen Emissionen vorhanden, die als gesundheitliches Risiko gilt, was sich die Bevölkerung auch bewusst wird.

Die nachfolgende Erfindung stellt sich die Aufgabe, diese Nachteile zu vermeiden. Zur Lösung dieser Aufgabe wird eine neue Dachkonstruktion für die mechanisierte Bewirtschaftung der Kompostbox vorgeschlagen, die das unkontrollierte Austreten von Aerosolen verhindert und das Kondensat der Decke auf die gesamte darunterliegende Fläche der Kompostbox gleichmässig rezykliert.

Erfindungsgemäss wird dies bei rechteckigen Kompostboxen des obigen Typs mit der umlaufenden Abdichtung des Dachrandes und durch eine permanente Schliesskraft, die dem Innendruck entgegen wirkt, erreicht, und damit, dass das Dach auf dem Dachrahmen durch vorzugsweise einheitliche Paneelen gebildet wird, deren Fläche aus einem semipermeablen Schichtstoff besteht, der atmungsaktiv ist und auf seiner Seite des Dachhimmels gratförmige Erhebungen aufweist, die zugunsten der lokalen Bildung und Ausscheidung des Kondensates vorzugsweise gitternetzartig strukturiert ist.

Das erfindungsgemässe Kompostboxdach weist wegen der kontrollierten Dichtheit und der gleichmässig verteilten Rückführung des Kondensates die höchstmögliche Hygiene für die Umwelt und die Steigerung der Qualität des Kompostes auf. Mit der Betätigungsvorrichtung der Dachflügel lässt sich das Dach nicht nur aufklappend öffnen, sondern auch schliessen und zwar mit so viel Kraft, dass die Dichtheit des Daches auch bei erhöhtem Betriebsdruck und bei Windstärke 4 der Beau-Fort-Skala, (was 5,5 bis 7,9 m/s Geschwindigkeit entspricht) gewährt bleibt. Durch die Verwendung von Dachpaneelen wird die Steifigkeit der Dachflügel erhöht, der Aufwand der Ortsmontage erheblich gesenkt und der Unterhalt der Dachflügel, wegen der örtlichen Reparaturmöglichkeit, begünstigt. Weil die Bestandteile der Dachpaneele einfach zu konfektionieren, Platz sparend zu lagern, mit reinen mechanischen Verfahren zu fertigen und zu warten sind, weist das System alle Vorzüge der modernen industriellen Technik und Logistik aus.

Nachfolgend wird ein entsprechendes Ausführungsbeispiel die Erfindung anhand der Figuren im einzelnen beschrieben. Dabei zeigt
- Fig. 1: die Hälfte der Ansicht von zwei benachbarten Kompostboxen mit geschlossenem und geöffnetem Tor und Dach und die dazugehörende offene und geschlossene Dachbetätigung,
- Fig. 2: die Ansicht des Dachgiebels mit Regenschutz und den Dachpaneelen, sowie den Querschnitt der umlaufenden Flachdichtung und den aufgebrochenen Elementen des Dachrahmens,
- Fig. 3: den Querschnitt des seitlichen Dachrahmenprofils und einer Dachpaneele gemäss den Schnittangaben der Fig. 2,
- Fig. 4: die Eckpartie der Dachpaneele gemäss den Schnittangaben der Fig. 3,
- Fig. 5: ein Teil des semipermeablen Schichtstoffes in Ansicht und Schnitt,
- Fig. 6: das Detail des geschlossenen Dachscharniers mit der umlaufenden Dichtung des Daches der Scharnierpartie,
- Fig. 7: das Detail des offenen Dachscharniers mit der umlaufenden Dichtung des Daches der Scharnierpartie.

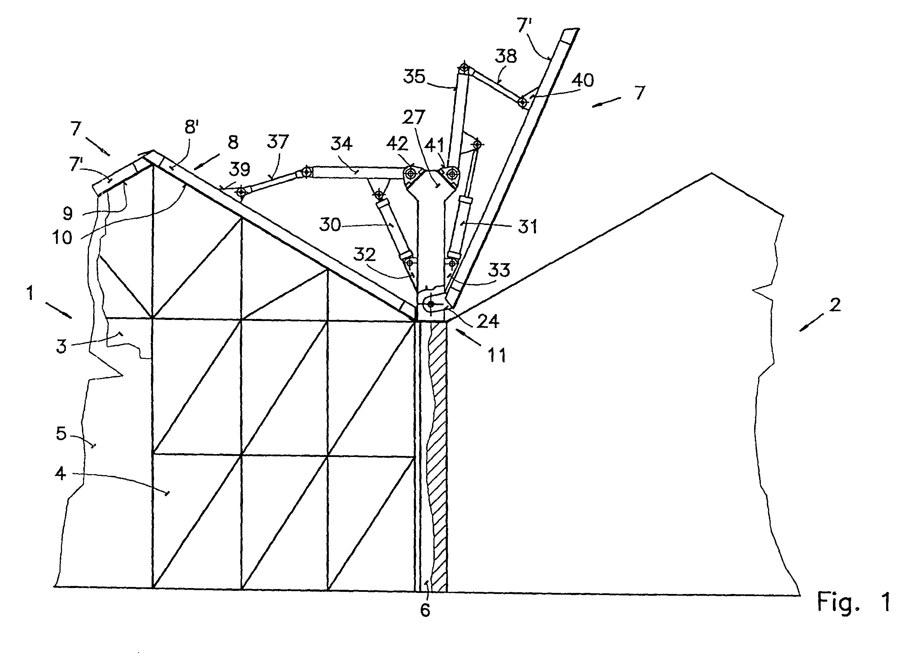

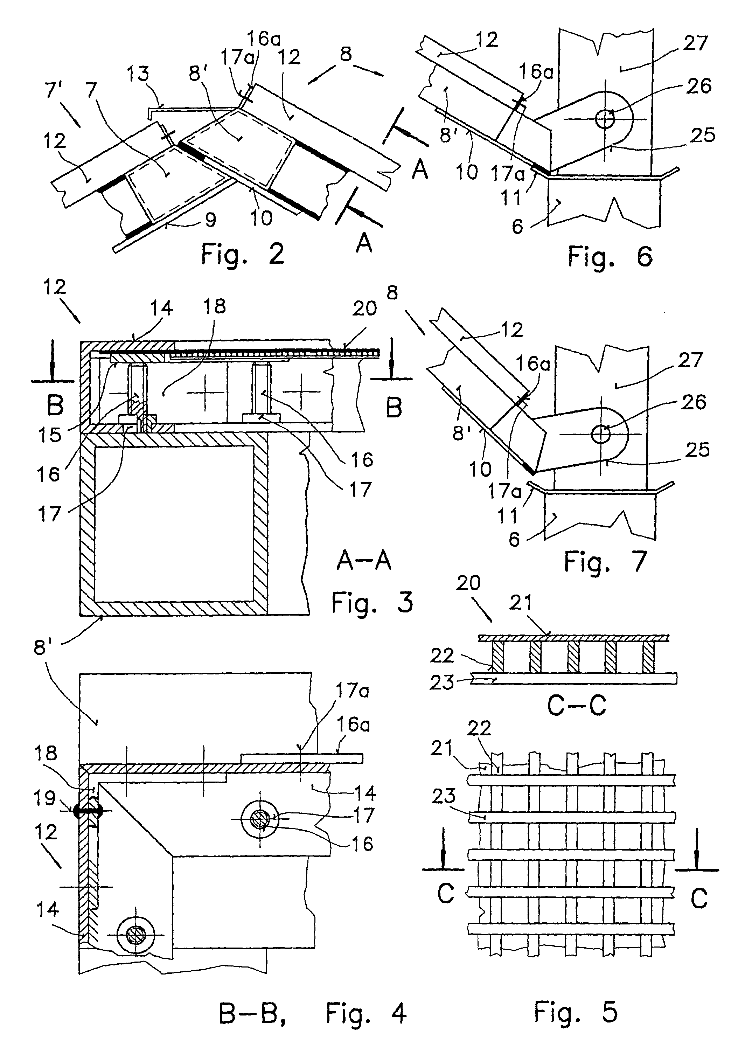

In der Figur 1 ist die Ansicht je zur Hälfte von der geschlossenen Kompostbox 1 mit geschlossenen Torflügeln 3,4 und der geschnittenen offenen Kompostbox 2 dargestellt. Den Dachgiebel, der in der Figur 2 vergrössert erscheint, bilden die zwei sich überlappenden Dachflügel 7, 8, wovon sich der kürzere Dachflügel 7 mit der umlaufenden Flachdichtung 9 auf die Rückwand 5 und auf den Torflügel 3 und, analog der Fig. 6, auf die Mauerkrone 11 der Trennwand 6 stützt. Der längere Dachflügel 8 mit der umlaufenden Flachdichtung 10 stützt sich auf die Stirnfläche des Dachrahmens 7' des Dachflügels 7, auf die Oberkante des Tores 4, die Rückwand 5 und auf die Mauerkrone 11 der Trennwand 6 (vgl. Fig. 6). Die Dachrahmen 7', 8' der Dachflügel 7, 8 sind Schweisskonstruktionen und vorteilhafterweise (wie Fig. 1, 2, 3 und 6 zeigen) aus Trapez und quadratischen Hohlträgerprofilen gebildet und dienen der Aufnahme und dem Tragen der Dachpaneelen 12 (vgl. 2, 3, 4, 6, 7). Die Frontseite des längeren, überlappenden Dachflügels 8 kann, wie Fig. 2 zeigt, mit einem Wetterschutzblech 13 versehen sein, das über die Kante der Dachpaneelen 12 reicht. Zur Beplankung der Dachrahmen 7', 8' sind Dachpaneelen 12 vorgesehen, die nebeneinander in einer Reihe verlegt sind und wie Wechselrahmen für den Einsatz und den Austausch des atmungsaktiven Abdeckungsschichtstoffes 20 dienen. Sie bestehen, wie die Figuren 3 und 4 zeigen, vorteilhafterweise aus jeweils einem U-Profilrahmen 14 mit Gehrungsschnitt und der rechteckigen Winkelverbindung 18, die wahlweise mit lösbaren oder unlösbaren Verbindungselementen 19, wie Schrauben oder Blindnieten zu verbinden sind. Für die dichte Fixierung des Abdeckungsschichtstoffes 20 in der Dachpaneele 12 sind Flachprofile 15 und Madenschrauben 16 mit Innensechskant und Einsatzmuttern 17 vorgesehen, die zwecks Bedienung und Positionierung in Bohrungen des U-Profilrahmens 14 einzulassen sind.
Der Abdeckungsschichtstoff 20 besteht, gemäss Fig. 5, aus einer atmungsaktiven, semipermeablen Plane 21 und auf ihre Seite des Dachhimmels aus vorzugsweise aufkaschierten, gratförmigen Erhebungen 22, 23 von ca. 1 mm Breite und ca. 2 mm Höhe, die reihen- und zeilenweise angeordnet und miteinander zu einer gitternetzartigen Struktur und einer Maschenweite von ca. 5,0 mm verbunden sind. Zur Dichtung der Spalten und Fugen zwischen dem Dachrahmen 7', 8' und der Dachpaneelen 12 sowie den Spalten und Fugen der Dachpaneele 12 eignen sich bewährte Mitteln des Metallbaus wie Fugenpasten auf Silikonbasis und Klebebänderstreifen.
Für die Befestigung der Dachpaneele 12 dienen auf den Dachrahmen 7', 8', wie die Figuren 2 bis 7 zeigen, Laschen 16a und Schrauben 17a.
Die Dachflügel 7, 8 sind auf ihrer der Trennwand 6 zugewandten Seiten mit Traglaschen 24 (vgl. Fig. 1) und Traglaschen 25 (vgl. Fig. 6, 7) winkelhebelartig mit einem Bolzen 26 der Tragsäule 27 schwenkbar verbunden. Dank dieser Anordnung wird die umlaufende Flachdichtung 10 entlang der Trennwand 6, gemäss Figuren 6 und 7, bei der Schwenkbewegung der Dachflügel 8 von der Mauerkrone 11 abgehoben und bei der Niederlassung mit vernachlässigbarer Scherung dichtend zusammen gepresst.

Damit der Schaufellader das Kompostgut in die Kompostbox 1, 2 ungehindert fast bis zu den geschlossenen Dachflügeln 7, 8 füllen kann, wird der Dachflügel 7, gemäss der Fig. 1, mit dem hydraulischen Zylinder 31 hoch geklappt. Dabei stützt sich der Zylinder 31 mit dem Lagerbock 33 auf die Tragsäule 27, die auf der Trennwand 6 steht und verankert ist, und richtet den auf der Tragsäule 27 im Lager 41 gefassten Winkelhebel 35 annähernd senkrecht auf, so dass der Knickarm 38, der im Lagerbock 40 des Dachflügels 7 gelagert ist, den Dachflügel 7 einzieht.
Weil die hydraulischen Zylinder 30 und 31 doppelwirkend sind, lässt sich der am Lagerbock 32 an der Tragsäule 27 befestigte hydraulische Zylinder 30 auch einfahren, so dass der an der Tragsäule 27 im Lager 42 gefasste Winkelhebel 34 in die waagrechte Position gezogen und somit um den Bolzen 26 (vgl. Fig. 6) schwenkbaren Dachflügel 8, mit dem Knickarm 37, (der im Lagerbock 39 befestigt ist), auf den Dachflügel 7, den Torflügel 4, die Rückwand 5 und die Mauerkrone 11 so angedrückt wird, dass die am unteren Rand des Dachflügels 8 befestigte umlaufende Flachdichtung 10 dichtend zusammengepresst wird.

## Patentansprüche

1. Dach zum Zu- und Abdecken von Kompost in Boxen (1, 2) in Form einer auf Rück-(5) und Trennwand (6) und Boxtürflügeln (3, 4) aufruhenden brückenartigen Abdeckung, vorzugsweise aus Dachflügeln (7, 8) zum Auf- und Zuklappen, die mindestens aus einem Dachrahmen (7', 8'), einem deckenden Überzug aus atmungsaktiver Plane (21) und einer Betätigung besteht **dadurch gekennzeichnet, dass** der Dachrahmen (7', 8') eine vorzugsweise umlaufende Dichtung (9, 10) aufweist und die Betätigung (24 bis 42) so gestaltet ist, dass sie wahlweise dient, den Dachflügel (7, 8) zu öffnen oder dichtend zu schliessen, wobei die Dichtheit des Daches unkontrolliertes Austreten von Aerosolen auch bei erhöhten Betriebsdruck verhindert.

2. Dach nach Anspruch 1, aus mindestens einem Dachrahmen (7', 8'), **dadurch gekennzeichnet, dass** der Dachrahmen (7', 8') für die Aufnahme von Dachpaneelen (12) dient.

3. Dach nach den Ansprüchen 1 und 2 **dadurch gekennzeichnet, dass** die Dachpaneele (12) als Wechselrahmen ausgebildet ist und vorzugsweise aus einem U-Profilrahmen 14 besteht.

4. Dach nach den Ansprüchen 1 bis 3 **dadurch gekennzeichnet, dass** die Dachpaneele (12) eine atmungsaktive, semipermeablen Plane (21) tragen, die auf ihrer Dachhimmelseite mit gratförmigen Erhebungen (22, 23) versehen ist, und dass die Erhebungen (22, 23), die vorzugsweise reihen- und zeilenweise angeordnet sind, miteinander zu gitternetzartigen Strukturen verbunden sind.

5. Dach nach den Ansprüchen 1 und 2 **dadurch gekennzeichnet, dass** der geschlossene Dachflügel (7, 8) durch eine permanente Kraft, die gegen den Innendruck der Kompostbox (1, 2) wirkt, gepresst wird.

6. Dach nach den Ansprüchen 1, 2 und 5 **dadurch gekennzeichnet, dass** zur Betätigung der Dachflügel (7, 8) vorzugsweise doppelwirkende hydraulische Zylinder (30, 31) dienen.

7. Dach nach den Ansprüchen 1, 2 sowie 5 bis 7 **dadurch gekennzeichnet, dass** der Dachrahmen (7', 8') mit der Tragsäule (27) und den Knickarmen (37, 38) sowie den Winkelhebeln (34, 35) gelenkig verbunden sind.

8. Dach nach den Ansprüchen 1, 2 sowie 5 und 6 **dadurch gekennzeichnet, dass** die hydraulischen Zylinder (30, 31) mit Lagerblöcken (32, 33) an der Tragsäule (27) und mit Gelenken an den Winkelhebeln (34, 35) verbunden sind.

9. Dach nach den Ansprüchen 1, 2 sowie 5 bis 7 **dadurch gekennzeichnet, dass** am Ende des Dachrahmens (7', 8') ein Winkelhebel mit Traglaschen (24, 25) gebildet wird, und die Traglaschen (24, 25) mit der Tragsäule (27) durch den Bolzen (26) scharnierartig verbunden sind.

10. Dach nach den Ansprüchen 1, 2 sowie 5 bis 7 **dadurch gekennzeichnet, dass** die Tragsäule (27) mit der Mauerkrone (11) auf der Trennwand (6) steht und die Mauerkrone (11) als Andruckfläche für die umlaufende Flachdichtung (9, 10) des Dachflügels (7, 8) dient.

## Claims

1. A lid for enclosing and covering compost in boxes (1, 2) in the form of a bridge-like cover, which rests on a rear wall (5), a partition wall (6), and box-door flaps (3, 4) and preferably comprises lid flaps (7, 8) which can be swung open and closed and comprise at least one lid frame (7', 8'), a covering layer of breathable tarpaulin (21) and an actuating means, **characterised in that** the lid frame (7', 8') has a preferably peripheral seal (9, 10) and the actuating means (24 to 42) is constructed such that it optionally serves to open the lid flaps (7, 8) or close them in sealed manner.

2. A lid according to Claim 1 comprising at least one lid frame (7', 8'), **characterised in that** the lid frame (7', 8') serves to receive lid panels (12).

3. A lid according to Claims 1 and 2 **characterised in that** the lid panel (12) is constructed as a removable frame and preferably comprises a U-profile frame (14).

4. A lid according to Claims 1 to 3, **characterised in that** the lid panels (12) support a breathable, semi-permeable tarpaulin (21), which is provided on its ceiling side with ridge-type elevations (22, 23), and **in that** the elevations (22, 23), which are preferably arranged in vertical and horizontal rows, are connected together to form grid-like structures.

5. A lid according to Claims 1 and 2, **characterised in that** the closed lid flap (7, 8) is pressed by a permanent force acting in opposition to the inner pressure of the compost box (1, 2).

6. A lid according to Claims 1, 2 and 5, **characterised in that** preferably double-acting hydraulic cylinders (30, 31) serve to actuate the lid flaps (7, 8).

7. A lid according to Claims 1 and 2 and also 5 to 7 [sic], **characterised in that** the lid frames (7', 8') are connected in articulated manner to the supporting column (27) and the folding arms (37, 38) and also the angle levers (34, 35).

8. A lid according to Claims 1 and 2 and also 5 and 6, **characterised in that** the hydraulic cylinders (30, 31) are connected to bearing blocks (32, 33) on the supporting column (27) and to articulated joints on the angle levers (34, 35).

9. A lid according to Claims 1 and 2 and also 5 to 7, **characterised in that** an angle lever having supporting clips (24, 25) is formed at the end of the lid frame (7', 8'), and the supporting clips (24, 25) are connected in hinge-like manner to the supporting column (27) by means of the bolt (26).

10. A lid according to Claims 1 and 2 and also 5 to 7, **characterised in that** the supporting column (27) stands on the top (11) of the partition wall (6), and the top (11) of the wall serves as a contact face for the peripheral flat seal (9, 10) of the lid flap (7, 8).

## Revendications

1. Toit pour recouvrir et découvrir du compost dans des bacs (1,2) sous la forme d'un recouvrement à la manière d'un pont reposant sur une paroi arrière (5) et une paroi de séparation (6) et de battants ou volets de porte de bacs (3,4), recouvrement qui est constitué de préférence de volets de toit (7,8) pour l'ouverture et la fermeture et qui consiste au moins en un cadre de toit (7',8'), une enveloppe de recouvrement réalisée à partir d'une bâche permettant l'aération (21) et un organe d'actionnement, **caractérisé en ce que** le cadre de toit présente de préférence une étanchéité périphérique (9,10) et l'organe d'actionnement (24 à 42) est conçu de façon à assurer sélectivement l'ouverture ou la fermeture hermétique du volet de toit (7,8), dans lequel l'étanchéité du toit empêche l'échappement non contrôlé d'aérosols, même en cas de pression de service élevée.

2. Toit selon la revendication 1, à partir d'au moins un cadre de toit (7',8'), **caractérisé en ce que** le cadre de toit (7',8') sert à recevoir les panneaux de toit (12).

3. Toit selon les revendications 1 et 2, **caractérisé en ce que** le panneau de toit (12) est conçu comme châssis de changement et consiste de préférence en un châssis de profilés en U (14).

4. Toit selon les revendications 1 à 3, **caractérisé en ce que** les panneaux de toit (12) supportent une bâche (21) semi-perméable, permettant l'aération, qui présente des reliefs (22,23) en forme d'arêtes sur le côté faîtier du toit et **en ce que** les reliefs (22,23) qui sont de préférence agencés en lignes et en rangées, sont raccordés entre eux pour donner des structures en forme de quadrillage.

5. Toit selon la revendication 1 et 2, **caractérisé en ce que** l'aile de toit fermée (7,8) est pressée sous l'effet d'une force permanente en opposition à la pression intérieure du bac de compostage (1,2).

6. Toit selon les revendications 1,2 et 5, **caractérisé en ce que** pour l'actionnement des volets de toit (7,8), il est prévu des vérins hydrauliques (30,31), de préférence à double effet.

7. Toit selon les revendications 1,2 ainsi que 5 à 7, **caractérisé en ce que** le cadre de toit (7',8') est raccordé avec le poteau porteur (27) et les bras articulés (37,38) ainsi qu'avec les leviers coudés (34,35) de façon articulée.

8. Toit selon les revendications 1,2 ainsi que 5 et 6, **caractérisé en ce que** les vérins hydrauliques (30,31) sont raccordés aux paliers de support (32,33) sur le poteau porteur (27) et avec les articulations sur les leviers coudés (34,35).

9. Toit selon les revendications 1,2 ainsi que 5 à 7, **caractérisé en ce que** sur l'extrémité du cadre de toit (7',8') est formé un levier coudé avec des attaches porteuses (24,25), et les attaches porteuses (24,25) sont raccordées au poteau porteur (27) par le boulon (26) à la manière d'une charnière.

10. Toit selon les revendications 1,2 ainsi que 5 à 7, **caractérisé en ce que** le poteau porteur (27) se situe avec le chapiteau (11) sur la paroi de séparation (6) et le chapiteau (11) sert de face d'appui pour l'étanchéité plate périphérique (9,10) du volet de toit (7,8).
